# EUROPEAN PATENT SPECIFICATION

(11) **EP 4 117 883 B1**
(45) Date of publication and mention of the grant of the patent: **07.01.2026**
(21) Application number: 21730309.8
(22) Date of filing: 12.03.2021
(51) Int. Cl.: B29C 43/18, E01C 9/08, E01F 3/00, E01C 5/20, B29C 43/00, B29K 101/12, B29K 105/00, B29L 31/00, B29K 623/00

(54) **LOAD-BEARING PLATE WITH CELLULAR STRUCTURE MANUFACTURING PROCESS**
HERSTELLUNGSVERFAHREN FÜR EINE TRAGFÄHIGE PLATTE MIT ZELLULÄRER STRUKTUR
PROCÉDÉ DE FABRICATION D'UNE PLAQUE PORTEUSE À STRUCTURE CELLULAIRE

(30) Priority: 12.03.2020 SI 202000047
(43) Date of publication of application: 18.01.2023
(73) Proprietor: Isokon, d.o.o., Slovenske Konjice, 3210 Slovenske Konjice (SI)
(72) Inventor: SVAB, Iztok, 3000 Celje (SI)
(74) Representative: Jersan, Tatjana
(86) International application number: PCT/SI2021/050010
(87) International publication number: WO 2021/183060

(56) References cited:
- JP-A- 2014 200 581
- JP-A- S57 151 308
- KR-A- 20160 107 461
- US-A1- 2016 318 262
- US-B2- 7 370 452

## Description

### Field of Technology

Load-bearing plates; load-bearing plates with cellular structure; interconnecting mats; manufacturing process for load-bearing plates; floor mats; pedestrian mats; road mats; ground protection mats; helicopter landing pads; construction plates.

### Technical Problem

Load-bearing plates with cellular structure are typically made of several pieces with the two main components, i.e., upper, and lower components formed by pressing, injection molding or other methods.

The individual components of the load-bearing plates are then assembled using mechanical fasteners, thermal treatment, welding or other known methods or any combination of the known methods.

The load-bearing plate with a cellular structure presented in this invention is manufactured in a single step by means of pressing, whereby a supporting surface with solid external surfaces and a hollow cellular structure of the core is formed. The invention also describes the process that makes it possible to manufacture the load-bearing plate with a cellular structure in a single step. The new method of production described avoids the need to attach several components to assemble and form a supporting surface.

### State of the Art

There are several types of reusable load-bearing plates systems for the construction of supporting surfaces, which can be used to design temporary roadway, vehicular, pedestrian, road and/or working surfaces. Such load-bearing plate systems are generally made of durable materials, have surface structures to improve their traction, are joined together, and can be easily deployed and dismantled. When the load-bearing plate systems are installed, they provide a stable supporting surface for movement of vehicles, equipment and/or people or a working surface that can carry high loads. Load-bearing plates which are part of the load-bearing plate systems can be constructed as full or monolithic load-bearing plates or with a cellular structure or other type of the core structure. Monolithic plates have significantly greater weight, more material is used for their manufacture, and they do not provide high level of stiffness or load-bearing capacity, which means that they can deflect under load. Compared to monolithic load-bearing plates, load-bearing plates with cellular structure provide greater stiffness and provide a more stable and even working surface.

Relevant prior art can for example be found in documents JP 2014 200581 A, KR 2016 00107461 and JP S57 151308.

Load-bearing plates with a cellular structure are typically made of several pieces, with the two main components, i.e., upper, and lower components formed by pressing, injection molding or other procedures, and are then assembled together with mechanical fasteners, welding, other procedures or any combination of methods. There are several ways in which individual load-bearing plate components can be assembled into a single unit.

### Description of the new invention

The subject of the invention is:
a manufacturing process for a load-bearing plate with a cellular structure,
that solves the technical problems of:
- facilitating the manufacture of the product, since it is not necessary to assemble individual load-bearing plates with line or point connection;
- ensuring compactness of individual plates, since individual components are not interconnected with point and/or line connection;
- manufacturing load-bearing plates with cellular structure in a single step.

A load-bearing plate with a cellular structure comprises at least an upper solid surface, a lower solid surface and a cellular structure forming a core.

The upper solid surface, the lower solid surface and the cellular structure are all made of the same material, which can be any solid thermoplastic material, preferably polyethylene (PE) or polypropylene (PP).

The cellular structure is made of solid material and can be constructed in any way, but preferably by extrusion or machining from full material or injection molding. The cellular structure element of the required dimensions is a pre-prepared element in advance.

The cellular structure can be of any shape and is constructed with energy directors to improve connectivity or additionally prevent spacing between the cellular structure, the upper solid surface and the lower solid surface.

The cellular structure can be constructed with hollow cells aligned in such a way that axes of the hollow cells are parallel or perpendicular to the planes of the upper solid surface and the lower solid surface, or the hollow cells are positioned in such a way that the axes of the hollow cells are parallel to the planes of the upper solid surface and the lower solid surface in certain parts but perpendicular in other parts.

The design, dimensions and material of the upper solid surface, the lower solid surface and the cellular structure are optimised to achieve the required mechanical properties of the load-bearing plate with a cellular structure.

Before filling the thermoplastic material into the press mold, the molds are pre-heated to a temperature preferably ranging between 80°C and 110°C. The lower and the upper mold, i.e., the upper and the lower tools, are pre- heated. The lateral frames of the press mold are preferably not pre-heated and remain cold.

In the manufacturing process for the load-bearing plate with a cellular structure, the thermoplastic material is spread over the bottom of the pre-heated lower mold up to the height that is appropriate to form the lower solid surface. The thermoplastic material is levelled to an even height. The density of the thermoplastic material ranges between 900 and 1100 kg/m³.

The thermoplastic material for the lower solid surface and the upper solid surface can be in any form, preferably in powdered form.

The lower solid surface and/or upper solid surface can be smooth or at least one of them is constructed with structural designs on the external surfaces to provide traction, preferably to provide better grip and traction of vehicle wheels on transport vehicles, to prevent the wheels from slipping.

The pre-formed elements of the cellular structure, which are made of the same material, are placed on the heated levelled thermoplastic material, which is preferably intended to form the lower solid surface. The pre-formed elements of the cellular core structure are positioned on a predefined distance from the lateral edges of the mold.

When the cellular core structure is positioned, the same material as is used to form the lower solid surface is added inside the press mold, on and along the pre-formed elements of the cellular core structure and up to the depth required to form the lateral surfaces and the upper solid surface. The thermoplastic material is evenly spread to the required depth over the upper surface.

If the axes of the hollow cells forming the cellular core structure are perpendicular to the plane of the upper solid surface, a partition in the form of a thermoplastic film or in any other form is placed over the cellular core structure to prevent the thermoplastic material intended for shaping the upper solid surface from filling the hollow cells of the cellular core structure. Various materials can be used to manufacture the components of the load-bearing plate with a cellular structure; however, all the components of the load-bearing plate with a cellular structure are made of the same material.

The upper and the lower molds are heated to a set temperature, preferably ranging between 150°C and 200°C. The press mold presses the molds with a pre-set pressing force for a specified time, according to the required product dimensions, to compression mold the thermoplastic material.

The load-bearing plate surfaces and the cellular structure are bonded together using required pressure and temperature cycle time necessary for the thermoplastic material.

Subsequently, the heating of the lateral frames of the press mold is switched on, with the temperature being set separately, and they are heated until the end of the heating cycle.

During the manufacture of the load-bearing plates with a cellular structure, the surfaces of the heated upper and lower molds and lateral frames press the material using the pressure and temperature required so as to achieve melting of only the material surrounding the pre-formed cellular structure in order to bond this molten material with the pre-formed cellular structure.

The heated material that forms the upper and the lower solid surfaces and the material along the lateral surfaces of the cellular structure bonds with the cellular structure and energy directors on the cellular structures.

The load-bearing plate with a cellular structure is then cooled for a specified time and pressure, depending on the mass, volume, and distribution of material.

When the temperature of the product in the press mold drops to a specified value, the pressing force or pressure is increased and the surface applies pressure on the load-bearing plate with a cellular structure for a pre-set time, after which the pressure is decreased again and the load-bearing plate with a cellular structure is further cooled at the required pressure.

After the cooling step, the load-bearing plate with a cellular structure is removed from the press mold.

Load-bearing plates with a cellular structure manufactured in a single step are more rigid and prevent the movement between the components, since the individual components are connected by surface bonding instead of line or point connections as is the case with load-bearing plates that require assembly from two or more components.

Load-bearing plates with a cellular structure or tools (press molds) for manufacturing load-bearing plates with a cellular structure can be designed to allow the manufacture of load-bearing plates with or without overlaps. The tools can be of different dimensions according to the required final dimensions of the load-bearing plate with a cellular structure.

The load-bearing plates with a cellular structure can also be used as floor plates or wall load-bearing plates or for other purposes.

The essence of the invention is further explained below with the description of the embodiment and attached figures, whereby the figures are part of this patent application and show the following:

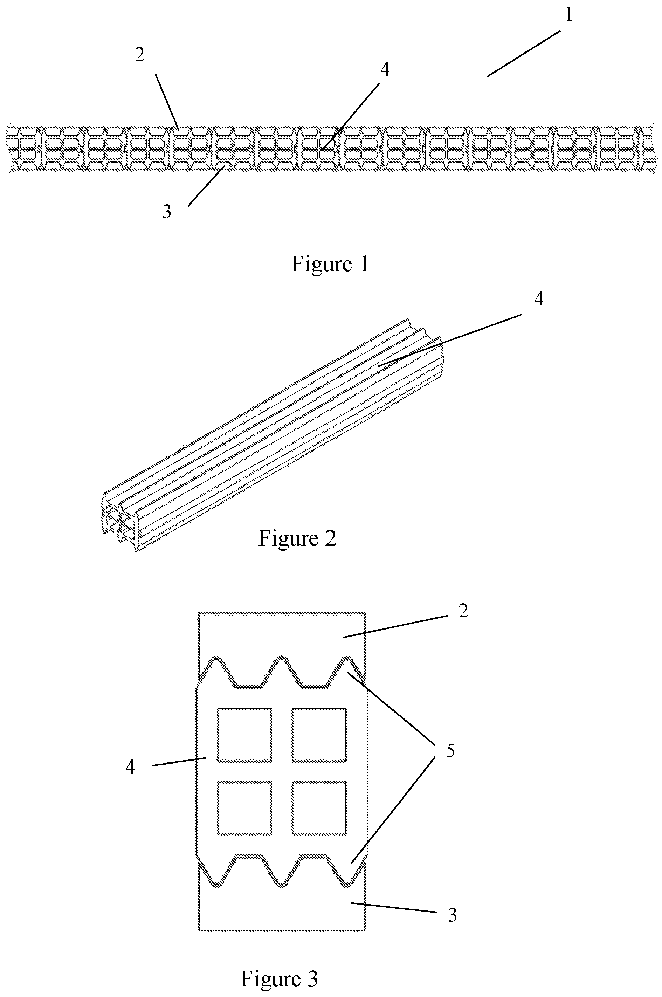

Figure 1 shows a load-bearing plate with a cellular structure 1, an upper solid surface 2, a lower solid surface 3 and a cellular structure 4.
Figure 2 shows a cellular structure 4.
Figure 3 shows an upper solid surface 2, a lower solid surface 3, a cellular structure 4 and energy directors 5.

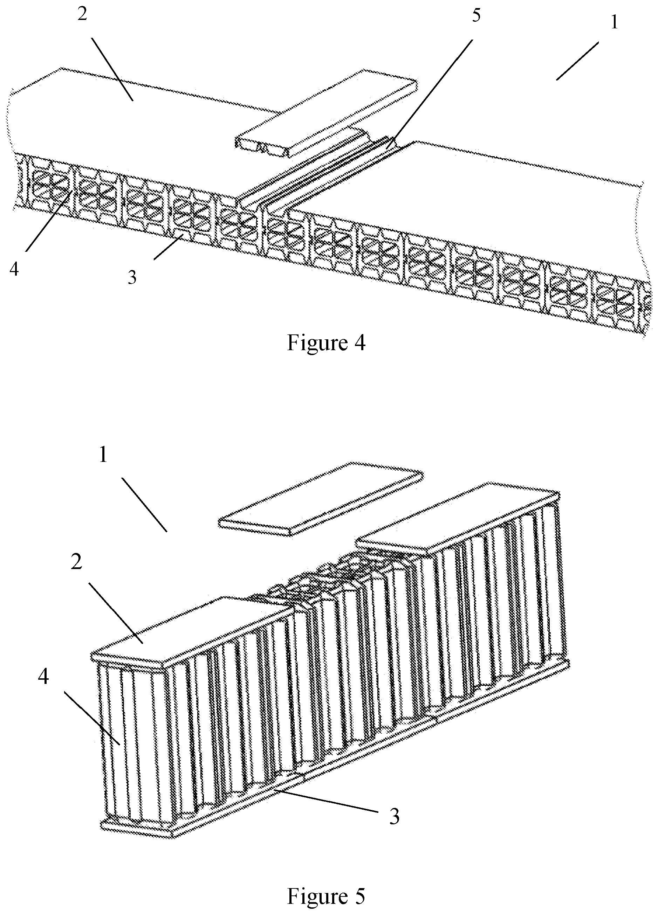

Figure 4 shows a load-bearing plate with a cellular structure 1, an upper solid surface 2, a lower solid surface 3, a cellular structure 4 and energy directors 5.
Figure 5 shows a load-bearing plate with a cellular structure 1, an upper solid surface 2, a lower solid surface 3 and a cellular structure 4.

### Exemplary embodiment:

The load-bearing plate with a cellular structure 1 is constructed without overlaps and measures 4000x2000x60 mm.

The upper solid surface 2, the lower solid surface 3 and the cellular structure 4 are made of polyethylene. The cellular structure 4 is made by extrusion and is constructed with energy directors 5 to improve bonding to the material used to form the upper and the lower solid surface as well as preventing spacing between the cellular structure 4, the upper solid surface 2 and the lower solid surface 3. The cellular structure 4 is constructed with directional hollow cells in such a way that the axes of the hollow cells are perpendicular to the planes of the upper solid surface 2 and of the lower solid surface 3.

Before filling the polyethylene into the tools, the tools are pre-heated to 100°C. The lower and upper tool (mold) are pre-heated, while the lateral frames remain cold.

8 kg/m² polyethylene in a powder form with a density of 960 kg/m³ is spread over the bottom of the pre-heated tool and is levelled to an even height.

The lower solid surface 3 and the upper solid surface 2 are constructed with structural designs or grips on external surfaces to provide better traction of wheels on transport vehicles.

Pre-formed elements of the cellular structure 4 with the profile height of 55 mm are placed on a heated levelled polyethylene material. The elements of the cellular structure 4, forming the core, are positioned 10 cm from each lateral edge of the tool.

When the cellular structure 4 is positioned, 8 kg/m² of polyethylene with a density of 960 kg/m³ is applied inside the press mold on and along the pre-formed elements of the cellular structure 4 forming the core to form the lateral surfaces and the upper solid surface 2. Polyethylene is evenly spread over the upper surface.

The upper surface (upper mold) is heated to 180°C, and the lower surface (lower mold) is heated to 160°C. Lateral heating frames are not heated at the beginning of the process. Initial pressures are set to a minimum pressure of 20 bar to close the press mold. The heating cycle time during pressing is 50 minutes. After 30 minutes of heating, the heating of the lateral frames is switched on with a temperature set to 170°C until the end of the heating cycle. The pressure remains at the minimum level during heating. After 48 minutes of heating, the heating of lower mold is switched off and after 50 minutes the heating of the upper mold is switched off, after which the heating cycle comes to an end. The load-bearing plate with a cellular structure 1 is then cooled under minimum pressure for 15 minutes.

When the temperature of the product, i.e. the load-bearing plate 1, drops below 90°C, the pressure is increased to 90 bars for 10 minutes, after which the pressure is decreased again to a minimum pressure of the press mold and the load-bearing plate with a cellular structure 1 is further cooled for 30 minutes. After cooling, the load-bearing plate with a cellular structure 1 is removed from the press mold.

## Claims

1. A manufacturing process for a load-bearing plate with a cellular structure (1), wherein said load-bearing plate (1) is comprised of an upper solid surface (2), a lower solid surface (3), lateral surfaces and a cellular structure (4) forming a core, **characterized in that** a thermoplastic material is evenly spread over a bottom of a press mold, that is over a bottom of a lower mold, up to a height required to form the lower solid surface (3), after which the pre-formed elements of the cellular structure (4) forming the core are placed on the heated thermoplastic material and the thermoplastic material is then added inside the mold on and along the cellular structure (4) up to a depth required to form the lateral surfaces and the upper solid surface (2) of the load bearing-plate (1), and the thermoplastic material is evenly levelled on an upper surface and the press tool presses the components at a set temperature whereby the load-bearing plate with a cellular structure (1) is formed.

2. The process according to claim 1, **characterised in that** the cellular structure (4) is constructed with directional hollow cells wherein the axis of the hollow cells is perpendicular or parallel to the planes of the upper solid surface (2) and the lower solid surface (3).

3. The process according to claim 1, **characterised in that** the cellular structure (4) is constructed with directional hollow cells wherein the axis of the hollow cells is perpendicular to the planes of the upper solid surface (2) and the lower solid surface (3) in certain parts and parallel in other parts.

4. The process according to claim 1, **characterised in that** the cellular structure (4) is constructed with energy directors (5).

5. The process according to claim 1, **characterized in that** a density of the thermoplastic material is in the range between 900 and 1100 kg/m³.

6. The process according to claims 1 to 5, **characterised in that** before introducing the thermoplastic material into the press mold, the upper and the lower molds are pre-heated to a temperature ranging between 80°C and 110°C.

7. The process according to any claims 1 to 6, **characterised in that** the pre-formed elements of the cellular structure (4) are positioned at a predefined distance from lateral edges of the lower mold.

8. The process according to any claims 1 to 7, **characterised in that** a thermoplastic film is placed on the cellular structure (4) to prevent the thermoplastic material intended for shaping the upper solid surface (2) of the load bearing-plate (1) from filling the hollow cells of the cellular structure (4).

9. The process according to any claims 1 to 8, **characterised in that** the upper and the lower molds are heated to a set temperature ranging between 150°C and 200°C.

10. The process according to any claims 1 to 9, **characterised in that** the heating of the lateral frames of the press mold is switched on subsequently, with the temperature being set independently, and they are heated until the end of the heating cycle.

11. The process according to any claims 1 to 10, **characterised in that** during the manufacture of load-bearing plates with a cellular structure (1), the surface of the heated tool presses on the material with an appropriate minimum pressure so as to soften or melt only the material surrounding the pre-formed cellular structure (4) forming the core in order to bond this molten material with the pre-formed cellular structures (4).

12. The process according to any claims 1 to 11, **characterised in that** heat melts material of the upper solid surface (2), of the lower solid surface (3) and the material along the lateral surfaces of the cellular structure (4) to bond with the cellular structure (4) and energy directors (5) on the cellular structure (4).

13. The process according to any claims 1 to 12, **characterised in that** the load-bearing plate with a cellular structure (1) is cooled for an appropriate time under a set pressure after the heating process.

14. The process according to claim 13, **characterised in that** during the manufacture of the load-bearing plate with a cellular structure (1), the temperature during the cooling of the load-bearing plate (1) drops to a specified value, the pressing force or pressure increases and the press mold applies pressure on the load-bearing plate with a cellular structure (1) for a pre-set time, after which the pressure decreases again and the load- bearing plate with a cellular structure (1) is further cooled at a minimum pressure.

## Patentansprüche

1. Herstellungsverfahren für eine tragfähige Platte mit einer zellulären Struktur (1), wobei die tragfähige Platte (1) aus einer oberen festen Oberfläche (2), einer unteren festen Oberfläche (3), seitlichen Oberflächen und einer zellulären Struktur (4) besteht, die einen Kern bildet, **dadurch gekennzeichnet, dass** ein thermoplastisches Material gleichmäßig über einen Boden einer Pressform verteilt wird, die sich über einem Boden einer unteren Form befindet, bis zu einer Höhe, die erforderlich ist, um die untere feste Oberfläche (3) zu bilden, wonach die vorgeformten Elemente der zellulären Struktur (4), die den Kern bilden, auf dem erwärmten thermoplastischen Material platziert werden und das thermoplastische Material dann innerhalb der Form auf und entlang der zellulären Struktur (4) bis zu einer Tiefe hinzugefügt wird, die erforderlich ist, um die seitlichen Oberflächen und die obere feste Oberfläche (2) der tragfähigen Platte (1) zu bilden, und das thermoplastische Material gleichmäßig auf der oberen Oberfläche nivelliert wird und das Presswerkzeug die Komponenten bei einer eingestellten Temperatur drückt, wodurch die tragfähige Platte mit der zellulären Struktur (1) gebildet wird.

2. Verfahren nach Anspruch 1, **dadurch gekennzeichnet, dass** die zelluläre Struktur (4) mit gerichteten Hohlzellen aufgebaut wird, wobei die Achse der Hohlzellen senkrecht oder parallel zu den Ebenen der oberen festen Oberfläche (2) und der unteren festen Oberfläche (3) ist.

3. Verfahren nach Anspruch 1, **dadurch gekennzeichnet, dass** die zelluläre Struktur (4) mit gerichteten Hohlzellen aufgebaut wird, wobei die Achse der Hohlzellen senkrecht zu den Ebenen der oberen festen Oberfläche (2) und der unteren festen Oberfläche (3) in bestimmten Teilen und parallel in anderen Teilen ist.

4. Verfahren nach Anspruch 1, **dadurch gekennzeichnet, dass** die zelluläre Struktur (4) mit Energierichtungsgebern (5) aufgebaut wird.

5. Verfahren nach Anspruch 1, **dadurch gekennzeichnet, dass** eine Dichte des thermoplastischen Materials im Bereich zwischen 900 und 1100 kg/m³ liegt.

6. Verfahren nach den Ansprüchen 1 bis 5, **dadurch gekennzeichnet, dass** vor dem Einbringen des thermoplastischen Materials in die Pressform die obere und die untere Form auf eine Temperatur zwischen 80°C und 110°C vorgewärmt werden.

7. Verfahren nach einem der Ansprüche 1 bis 6, **dadurch gekennzeichnet, dass** die vorgeformten Elemente der zellulären Struktur (4) in einem vorgegebenen Abstand zu seitlichen Rändern der Unterform positioniert werden.

8. Verfahren nach einem der Ansprüche 1 bis 7, **dadurch gekennzeichnet, dass** auf die zelluläre Struktur (4) eine thermoplastische Folie aufgelegt wird, um zu verhindern, dass das zur Formgebung der oberen festen Oberfläche (2) der tragfähigen Platte (1) vorgesehene thermoplastische Material die Hohlzellen der zellulären Struktur (4) füllt.

9. Verfahren nach einem der Ansprüche 1 bis 8, **dadurch gekennzeichnet, dass** die obere und die untere Form auf eine eingestellte Temperatur zwischen 150°C und 200°C erwärmt werden.

10. Verfahren nach einem der Ansprüche 1 bis 9, **dadurch gekennzeichnet, dass** die Erwärmung der Seitenrahmen der Pressform nachträglich eingeschaltet wird, wobei die Temperatur unabhängig eingestellt wird und diese bis zum Ende des Heizzyklus erwärmt werden.

11. Verfahren nach einem der Ansprüche 1 bis 10, **dadurch gekennzeichnet, dass** bei der Herstellung von tragfähigen Platten mit der zellulären Struktur (1) die Oberfläche des erhitzten Werkzeugs mit einem geeigneten Mindestdruck auf das Material drückt, um nur das die vorgeformte zelluläre Struktur (4) umgebende Material zu erweichen oder zu schmelzen, um dieses geschmolzene Material mit den vorgeformten zellulären Strukturen (4) zu verbinden.

12. Verfahren nach einem der Ansprüche 1 bis 11, **dadurch gekennzeichnet, dass** die Hitze das Material der oberen festen Oberfläche (2), der unteren festen Oberfläche (3) und des Materials entlang der Seitenflächen der zellulären Struktur (4) zur Verbindung mit der zellulären Struktur (4) und den Energierichtungsgebern (5) auf der zellförmigen Struktur (4) schmelzt.

13. Verfahren nach einem der Ansprüche 1 bis 12, **dadurch gekennzeichnet, dass** die tragfähige Platte mit der zellulären Struktur (1) nach dem Aufheizenverfahren für eine entsprechende Zeit unter einem eingestellten Druck abgekühlt wird.

14. Verfahren nach Anspruch 13, **dadurch gekennzeichnet, dass** bei der Herstellung der tragfähigen Platte mit der zellulären Struktur (1) die Temperatur während der Abkühlung der tragfähigen Platte (1) auf einen vorgegebenen Wert abfällt, die Anpresskraft bzw. der Druck zunimmt und die Pressform für eine vorgegebene Zeit Druck auf die tragfähige Platte mit der zellulären Struktur (1) ausübt, wonach der Druck wieder abnimmt und die tragfähige Platte mit der zellulären Struktur (1) bei einem Mindestdruck weiter abgekühlt wird.

## Revendications

1. Procédé de fabrication d'une plaque porteuse à structure cellulaire (1), dans lequel ladite plaque porteuse (1) est constituée d'une surface pleine supérieure (2), d'une surface pleine inférieure (3), de surfaces latérales et d'une structure cellulaire (4) formant un noyau, **caractérisé en ce qu'**un matériau thermoplastique est étalé uniformément sur un fond d'un moule de presse, c'est-à-dire sur un fond d'un moule inférieur, jusqu'à une hauteur requise pour former la surface pleine inférieure (3), après quoi les éléments préformés de la structure cellulaire (4) formant le noyau sont placés sur le matériau thermoplastique chauffé et le matériau thermoplastique est ensuite ajouté à l'intérieur du moule sur la structure cellulaire (4) et le long d'elle jusqu'à une profondeur requise pour former les surfaces latérales et la surface pleine supérieure (2) de la plaque porteuse (1), et le matériau thermoplastique est uniformément nivelé sur une surface supérieure et l'outil de presse presse les composants à une température déterminée moyennant quoi la plaque porteuse à structure cellulaire (1) est formée.

2. Procédé selon la revendication 1, **caractérisé en ce que** la structure cellulaire (4) est construite avec des cellules creuses directionnelles, l'axe des cellules creuses étant perpendiculaire ou parallèle aux plans de la surface pleine supérieure (2) et de la surface pleine inférieure (3).

3. Procédé selon la revendication 1, **caractérisé en ce que** la structure cellulaire (4) est construite avec des cellules creuses directionnelles, l'axe des cellules creuses étant perpendiculaire aux plans de la surface pleine supérieure (2) et de la surface pleine inférieure (3) dans certaines parties et parallèle dans d'autres parties.

4. Procédé selon la revendication 1, **caractérisé en ce que** la structure cellulaire (4) est construite avec des directeurs d'énergie (5).

5. Procédé selon la revendication 1, **caractérisé en ce qu'**une densité du matériau thermoplastique est comprise entre 900 et 1100 kg/m³.

6. Procédé selon les revendications 1 à 5, **caractérisé en ce qu'**avant l'introduction du matériau thermoplastique dans le moule de presse, les moules supérieur et inférieur sont préchauffés à une température comprise entre 80 °C et 110 °C.

7. Procédé selon l'une quelconque des revendications 1 à 6, **caractérisé en ce que** les éléments préformés de la structure cellulaire (4) sont positionnés à une distance prédéfinie des bords latéraux du moule inférieur.

8. Procédé selon l'une quelconque des revendications 1 à 7, **caractérisé en ce qu'**un film thermoplastique est placé sur la structure cellulaire (4) pour empêcher le matériau thermoplastique destiné à mettre en forme la surface pleine supérieure (2) de la plaque porteuse (1) de remplir les cellules creuses de la structure cellulaire (4).

9. Procédé selon l'une quelconque des revendications 1 à 8, **caractérisé en ce que** les moules supérieur et inférieur sont chauffés à une température déterminée comprise entre 150°C et 200 °C.

10. Procédé selon l'une quelconque des revendications 1 à 9, **caractérisé en ce que** le chauffage des cadres latéraux du moule de presse est activé ultérieurement, la température étant déterminée indépendamment, et ils sont chauffés jusqu'à la fin du cycle de chauffage.

11. Procédé selon l'une quelconque des revendications 1 à 10, **caractérisé en ce que** lors de la fabrication de plaques porteuses à structure cellulaire (1), la surface de l'outil chauffé appuie sur le matériau avec une pression minimale appropriée pour ramollir ou fondre uniquement le matériau entourant la structure cellulaire (4) préformée formant le noyau afin de lier ce matériau fondu avec les structures cellulaires préformées (4).

12. Procédé selon l'une quelconque des revendications 1 à 11, **caractérisé en ce que** la chaleur fond le matériau de la surface solide supérieure (2), de la surface solide inférieure (3) et le matériau le long des surfaces latérales de la structure cellulaire (4) afin de les lier à la structure cellulaire (4) et à des directeurs d'énergie (5) sur la structure cellulaire (4).

13. Procédé selon l'une quelconque des revendications 1 à 12, **caractérisé en ce que** la plaque porteuse à structure cellulaire (1) est refroidie pendant un temps approprié sous une pression déterminée après le processus de chauffage.

14. Procédé selon la revendication 13, **caractérisé en ce que** lors de la fabrication de la plaque porteuse à structure cellulaire (1), la température lors du refroidissement de la plaque porteuse (1) chute à une valeur déterminée, la force de pression ou la pression augmente et le moule-presse applique une pression sur la plaque porteuse à structure cellulaire (1) pendant une durée prédéterminée, après quoi la pression diminue à nouveau et la plaque porteuse à structure cellulaire (1) est en outre refroidie à une pression minimale.
